# EUROPEAN PATENT APPLICATION

(11) **EP 4 390 776 A2**
(43) Date of publication of application: **26.06.2024**
(21) Application number: 23213769.5
(22) Date of filing: 01.12.2023
(51) Int. Cl.: G06N 5/01, G06N 7/01, G06N 20/20

(54) **ENSEMBLE CLASSIFIER FOR IMPUTATION OF MOBILITY DATA OF UNKNOWN SUBJECT**

(30) Priority: 21.12.2022 IN 202221074346
(71) Applicant: Tata Consultancy Services Limited, Maharashtra (IN)
(72) Inventor: KUMARI, SHASHEE, 201309 Noida - Uttar Pradesh (IN); BHATTACHARYA, SAKYAJIT, 700160 Kolkata - West Bengal (IN); GHOSE, AVIK, 700160 Kolkata - West Bengal (IN); CHATTERJEE, ARNAB, 201309 Noida - Uttar Pradesh (IN)
(74) Representative: Goddar, Heinz J.

(57) **Abstract**

Research work in the literature on imputation of mobility data for missing records of a subject's location trajectory has been specifically revolved around usage of historical data. Thus, performances drop when missing records or imputation mobility data for unknown subject with very little or no historical data has to be predicted. A method and system for training an ensemble classifier for imputation of mobility data of unknown subject based on cohort of the unknown subject is disclosed. The method and system disclosed herein exploits the knowledge that semantic trajectories of different individuals has considerable similarity when individuals belong to the same cohort. This concept is used by the method to predict the behavior of all the individuals in a cohort using ensemble classifier, also referred to as imputation model, trained on the semantic location data of a fraction of total individuals in the cohort with a certain accuracy.

## Description

### CROSS-REFERENCE TO RELATED APPLICATIONS AND PRIORITY

The present application claims priority to Indian application no. 202221074346, filed on 21 December 2022.

### TECHNICAL FIELD

The embodiments herein generally relate to the field of data imputation and, more particularly, to a method and system for building ensemble classifier for imputation of mobility data of unknown subject.

BACKGROUNDLarge-scale human mobility data have been gathered by widely used location-based services, and this data has the potential to be very useful for a variety of applications, from individualized location recommendations to urban transportation planning. Even though the data has a high user penetration rate and spans a significant amount of time, individual trajectory records in it are incredibly sparse and unevenly distributed in time because users might not consent to the service provider collecting their locations continuously. This invariably degrades the performance of downstream applications. One approach to this issue is to represent individual trajectories as two-dimensional time series with latitude and longitude at each timestamp, and then impute the missing value. For the above purpose, smoothing filters and LSTM-based models have been proposed in the current state of art. Their performance is acceptable when only a small percentage of locations are missing due to limited movement during a short time span.

The bigger technical challenge in imputation of mobility data is that it is very subject specific, based on context user is in, geography user fall in, behavior type of the subject. Thus, building generalized mobility imputation systems fail to provide accurate information, thus reflecting the consequences to further applications that depend on this mobility data.

Most of the recent works that attempt to impute mobility data of subject or predict mobility of user rely on record of historical mobility data of user for predictions related to user and they rely on Global Positioning System (GPS) trajectories. Thus, existing approaches are user specific and cannot be applied to unknown subjects, with no history of mobility data. Obviously, generalized systems for imputing mobility data that can be applied across any geography, any user type are not available.

### SUMMARY

Embodiments of the present disclosure present technological improvements as solutions to one or more of the above-mentioned technical problems recognized by the inventors in conventional systems.

For example, in one embodiment, a method for imputation of mobility data is provided. The method includes generating a plurality of semantic trajectories of each of a plurality of subjects in a cohort amongst a plurality of cohorts from associated plurality of Global Positioning System (GPS) trajectories obtained for each of the plurality of subjects across a plurality of time periods, wherein each of the plurality of semantic trajectories is annotated with geographical locations or higher semantic locations associated with GPS locations present in each of the plurality of GPS trajectories. Further, the method includes training a plurality of ensemble classifiers for each of the plurality of cohorts for imputation of mobility data for a subject using the plurality of semantic trajectories of each of the plurality of subjects in the each of the plurality of cohorts, the training of an ensemble classifier from among of the plurality of ensemble classifiers comprising: generating a single training semantic trajectory by concatenating trajectories amongst the plurality of trajectories associated with plurality of subjects; generating a plurality of training samples by splitting the single training semantic trajectory into a plurality of sub-trajectories in accordance with a predefined timestep using a sliding window approach; and training the ensemble classifier based using the plurality of training samples. Further, the method includes receiving a request during an inferencing phase, by the one or more hardware processors, for imputing the mobility data of an unknown subject, wherein historical mobility data of the unknown user is scarce or unavailable. Further, the method includes classifying via a cohort classifier executed by the one or more hardware processors, the unknown subject to a cohort from amongst the plurality of cohorts via a cohort classifier based on meta data acquired for the unknown subject. Further, the method includes identifying the trained ensemble classifier associated with the cohort of the unknown subject, from among the plurality of trained ensemble classifiers, and imputing via the trained ensemble classifier executed by the one or more hardware processors, the mobility data of the unknown subject.

In another aspect, a system for imputation of mobility data is provided. The system comprises a memory storing instructions; one or more Input/Output (I/O) interfaces; and one or more hardware processors coupled to the memory via the one or more I/O interfaces, wherein the one or more hardware processors are configured by the instructions to generate a plurality of semantic trajectories of each of a plurality of subjects in a cohort amongst a plurality of cohorts from associated plurality of Global Positioning System (GPS) trajectories obtained for each of the plurality of subjects across a plurality of time periods, wherein each of the plurality of semantic trajectories is annotated with geographical locations or higher semantic locations associated with GPS locations present in each of the plurality of GPS trajectories. Further, the one or more hardware processors are configured to train a plurality of ensemble classifiers for each of the plurality of cohorts for imputation of mobility data for a subject using the plurality of semantic trajectories of each of the plurality of subjects in the each of the plurality of cohorts, the training of an ensemble classifier from among of the plurality of ensemble classifiers comprising: generating a single training semantic trajectory by concatenating trajectories amongst the plurality of trajectories associated with plurality of subjects; generating a plurality of training samples by splitting the single training semantic trajectory into a plurality of sub-trajectories in accordance with a predefined timestep using a sliding window approach; and training the ensemble classifier based using the plurality of training samples. Further, the one or more hardware processors are configured to receive a request during an inferencing phase, by the one or more hardware processors, for imputing the mobility data of an unknown subject, wherein historical mobility data of the unknown user is scarce or unavailable. Further, the one or more hardware processors are configured to classify via a cohort classifier executed by the one or more hardware processors, the unknown subject to a cohort from amongst the plurality of cohorts based on meta data acquired for the unknown subject. Further, the one or more hardware processors are configured to identify the trained ensemble classifier associated with the cohort of the unknown subject, from among the plurality of trained ensemble classifiers, and imputing via the trained ensemble classifier executed by the one or more hardware processors, the mobility data of the unknown subject.

In yet another aspect, there are provided one or more non-transitory machine-readable information storage mediums comprising one or more instructions, which when executed by one or more hardware processors causes a method for imputation of mobility data is provided. The method includes generating a plurality of semantic trajectories of each of a plurality of subjects in a cohort amongst a plurality of cohorts from associated plurality of Global Positioning System (GPS) trajectories obtained for each of the plurality of subjects across a plurality of time periods, wherein each of the plurality of semantic trajectories is annotated with geographical locations or higher semantic locations associated with GPS locations present in each of the plurality of GPS trajectories. Further, the method includes training a plurality of ensemble classifiers for each of the plurality of cohorts for imputation of mobility data for a subject using the plurality of semantic trajectories of each of the plurality of subjects in the each of the plurality of cohorts, the training of an ensemble classifier from among of the plurality of ensemble classifiers comprising: generating a single training semantic trajectory by concatenating trajectories amongst the plurality of trajectories associated with plurality of subjects; generating a plurality of training samples by splitting the single training semantic trajectory into a plurality of sub-trajectories in accordance with a predefined timestep using a sliding window approach; and training the ensemble classifier based using the plurality of training samples. Further, the method includes receiving a request during an inferencing phase, by the one or more hardware processors, for imputing the mobility data of an unknown subject, wherein historical mobility data of the unknown user is scarce or unavailable. Further, the method includes classifying via a cohort classifier executed by the one or more hardware processors, the unknown subject to a cohort from amongst the plurality of cohorts based on meta data acquired for the unknown subject. Further, the method includes identifying the trained ensemble classifier associated with the cohort of the unknown subject, from among the plurality of trained ensemble classifiers, and imputing via the trained ensemble classifier executed by the one or more hardware processors, the mobility data of the unknown subject.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system, for training an ensemble classifier for imputation of mobility data of unknown subject based on cohort of the unknown subject, in accordance with some embodiments of the present disclosure.
FIG. 1B illustrates an architectural overview of the system of FIG. 1A, in accordance with some embodiments of the present disclosure.
FIGS. 2A through 2B (collectively referred as FIG. 2) is a flow diagram illustrating a method for training the ensemble classifier for imputation of mobility data of unknown subject, using the system of FIG. 1A and 1B, in accordance with some embodiments of the present disclosure.
FIGS. 3 is a process flow depicting training of the ensemble classifier for imputation of mobility data, in accordance with some embodiments of the present disclosure.
FIGS. 4A through 4C (collectively referred to as FIG. 4) provide accuracy comparison for models of the ensemble classifier trained with and without test subject's data for imputation of mobility data of test subject, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Research work in the literature on imputation of mobility data for missing records of a subjects location trajectory has been specifically revolved around usage of historical data of the subject and usage of Global Positioning System (GPS) trajectories. Imputation refers to the assignment of a value to something by inference from the value of the products or processes to which it contributes, herein the location of mobile users. Thus, performances of these approaches drop when missing records or imputation mobility data for unknown user has to be predicted. The obvious reason being, generalizing mobility data imputation models is a technical challenge as user mobility prediction is very subjective. Furthermore, always getting the historical data of any subject is equally challenging due to technical issues to capture data as well as behavioral aspects of the subjects.

The location trajectory of an individual or subject is always guided by rules and patterns of higher semantic order. A semantic trajectory is defined as "a structured trajectory where the spatial data, such as the Global Positioning System (GPS) co-ordinates, are replaced by geo-annotations and further semantic annotations". Common sub-sequence based similarity in semantic trajectory has been used to establish similarity between different individuals and to exploit underlying social networks, e.g., in a university campus setting. Conversely, it can be inferred from this study that the similarity in semantic trajectories of different individuals is considerable when they belong to the same cohort (have shared characteristic).

However, imputation techniques for semantic trajectories have hardly been explored. Most of the applications directly work on the GPS trajectories. The effect on accuracy of imputed mobility data, when relied on GPS trajectory is explained with an example here. Consider people belonging to same cohort, thus as understood people belonging to same cohort have a shared characteristic. Now, it can be understood that two students (same cohort) in two different part of the same city might not have overlapping GPS trajectories. However, there is a high chance of the overlap in their trajectories at a semantic level. e.g., both the students might go to their respective schools in the morning returning to their respective homes in the afternoon with possibly a few stops (like eateries) in between. Thus, if a detailed semantic trajectory data of first student is available, then to predict the trajectory of the second student at the semantic level is possible if some metadata about the second student (like location where he actually lived) can be gathered. Thus, method and system disclosed herein can predict which areas he was more likely to visit at a particular instant of time using a mapping between actual(GPS) and semantic locations.

Thus, embodiments herein provide a method and system for training an ensemble classifier for imputation of mobility data of unknown subject based on cohort of the unknown subject. The method and system disclosed herein exploits the knowledge that semantic trajectories of different individuals has considerable similarity when individuals belong to the same cohort. This concept is used by the method to predict the behavior of all the individuals in a cohort using ensemble classifier, also referred to as imputation model, trained on the semantic location data of a fraction of total individuals in the cohort with a certain accuracy. One such application among many, is the imputation of missing data of semantic location of a population as semantic location data of individuals often suffers from missing data problem due to various technical as well as behavioral reasons. The imputation task can be made comparatively easy and inexpensive by using a global location data imputation model which has the ability to capture the major motifs in the trajectory patterns of a cohort and hence, can be used to impute data of a user or subject with less or no historical data once the subject is classified into the right cohort.

This imputed data can subsequently be fed to other models catering to various problems. A very significant example is the next location prediction of a group or an individual which has tremendous utility in epidemiology. Knowing future locations of a population at individual and group level in advance helps in detection of spread of epidemic in a community. It can also prompt proactive measures in controlling a contagious epidemic. As understood, accuracy of predictions in above mentioned applications is critical feature of imputation models of any system.

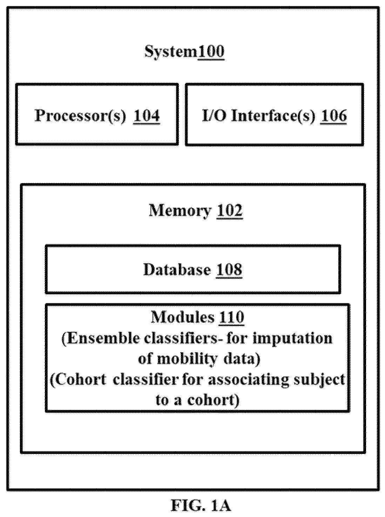

Referring now to the drawings, and more particularly to FIGS. 1A through 4C, where similar reference characters denote corresponding features consistently throughout the figures, there are shown preferred embodiments and these embodiments are described in the context of the following exemplary system and/or method.

FIG. 1A is a functional block diagram of a system 100, for training an ensemble classifier for imputation of mobility data of unknown subject based on cohort of the unknown subject, in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110 such as a plurality of ensemble classifiers trained for imputation of mobility data for each of a plurality of cohorts identified within general population and a cohort classifier. The ensemble of classifiers may be built based on Machine Learning (ML) models such as Random forest classifiers or the like that are well known in the art. The cohort classifier is trained to rightly classify a subject into one amongst the plurality of cohorts. The cohort classifier is built using technique well known in the art. For example, the cohorts can be identified using well known clustering methods. Metadata of the subjects like age, gender, job type, income group and other demographic features can be used for the clustering. The same metadata can be used to classify a new/unknown subject to the most suitable cohort using a classifier, (interchangeably referred as the cohort classifier), pretrained on the metadata of the subjects to classify them to the most suitable cohorts.

The plurality of modules 110 include programs or coded instructions that supplement applications or functions performed by the system 100 for executing different steps involved in the process of imputation of mobility data, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system 100 and methods of the present disclosure. For example, the cohort identified for the unknown subject or imputed mobility data for the unknown subject.

Further, the memory 102 includes a database 108. The database (or repository) 108 may include a plurality of abstracted piece of code for refinement and data that is processed, received, or generated as a result of the execution of the plurality of modules in the module(s) 110.

Although the database 108 is shown internal to the system 100, it will be noted that, in alternate embodiments, the database 108 can also be implemented external to the system 100, and communicatively coupled to the system 100. The data contained within such external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System

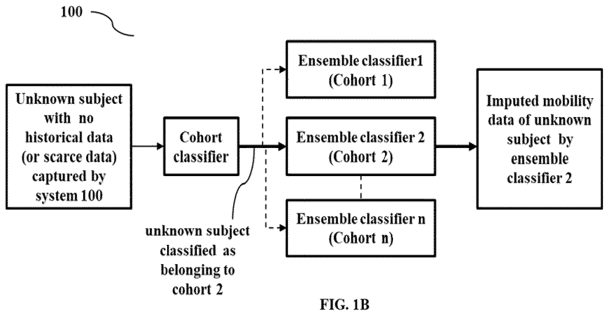

(RDBMS). Functions of the components of the system 100 are now explained with reference to diagrams in FIG. 1B through FIG. 3.

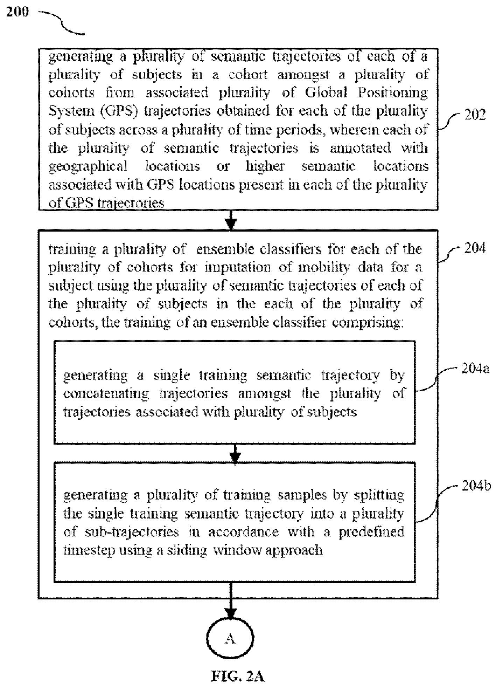

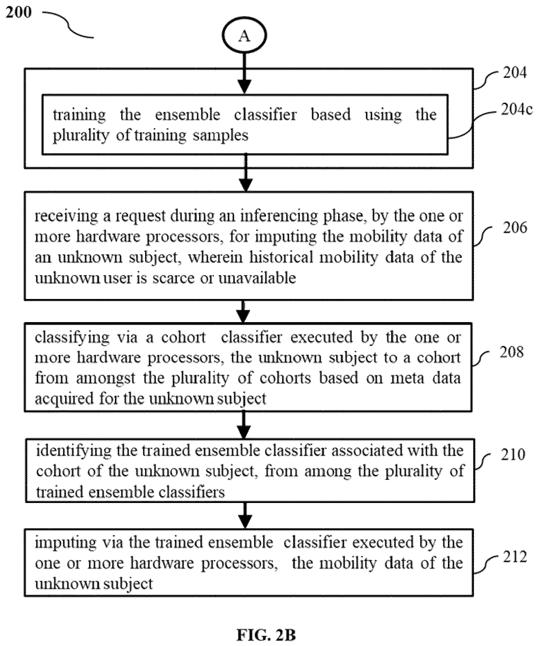

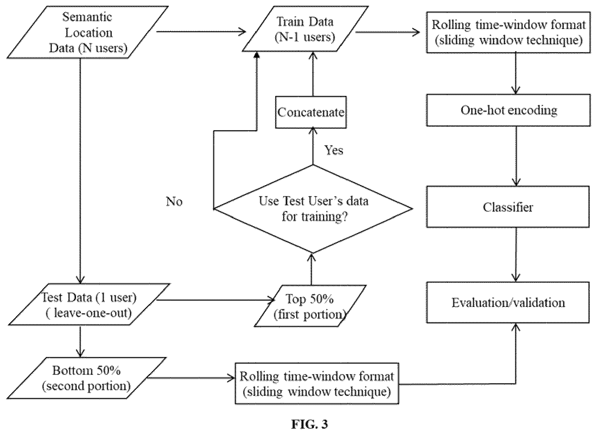

FIG. 1B illustrates an architectural overview of the system 100 of FIG. 1A, in accordance with some embodiments of the present disclosure. The system 100 comprises a plurality of ensemble classifiers or imputation models each trained on a cohort among a plurality of cohorts identified for user population for whom mobility data imputation is to be performed. Cohorts for example can be students, working class, senior citizens, etc., which are universal behavioral groups subjects can be associated with. Once ensemble classifiers are trained as explained in conjunction with method 200 of FIG. 2 and training process of FIG. 3, during inferencing stage, for any unknown subject or user with no or very little historical data, the system 100 can classify the unknown subject into a cohort and perform mobility data imputation using corresponding ensemble classifier for the identified cohort. The unknown subject is classified into one among the plurality of cohorts based on the cohort classifier. The cohorts can be identified using well known clustering methods. For example, a K-means clustering technique can be used if all the metadata is numerical. However, in case of categorical metadata for the subjects any categorical clustering method can be used. KModes clustering is one of the well-known unsupervised Machine Learning algorithms that is used to cluster categorical variables. Metadata of the subjects with numerical variables like age and the like categorical variables like gender, job type, income group, and other demographic features can be used for the clustering. The cohort for the unknown subject is identified using a pre-trained classifier using the metadata of the subject.

FIGS. 2A through 2B (collectively referred as FIG. 2) is a flow diagram illustrating a method 200 for training the ensemble classifier for imputation of mobility data of unknown subject, using the system of FIG. 1A and 1B, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and 1B and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to the steps of the method 200, at step 202 of the method 200, the one or more hardware processors 104 generates a plurality of semantic trajectories of each of a plurality of subjects in a cohort amongst a plurality of cohorts. The semantic trajectories are obtained from associated plurality of Global Positioning System (GPS) trajectories obtained for each of the plurality of subjects across a plurality of time periods, such as per hour data. Each of the plurality of semantic trajectories is annotated with geographical locations and higher semantic locations associated with GPS locations present in each of the plurality of GPS trajectories.

To obtain GPS trajectories for generating training data a collection of raw mobile data from n number of users or subjects, through plurality of GPS sensors embedded in mobile devices of users, call logs, Bluetooth devices in close proximity of the user's device, cell tower IDs, application usage, and phone status is carried out. A typical GPS feed is represented as a sequence of points G = p1, p2,..., pm where each pi is of the form (latitude, longitude, timestamp). Thereafter, construction of semantic trajectories is performed by replacing the coordinates with geo-annotations and further with semantic annotations like "Home", "Bus stop", "Office", "Cafeteria", etc. The location labels can be generated using a Hidden Markov Model known in the art, A typical semantic trajectory for a day looks like {L1,L2,...,L24} where Li represents the semantic location at i^{th} hour of the day and belongs to the set {'Home', `Elsewhere', 'Work', `No Signal', `Off ' }

At step 204, of the method 200, the one or more hardware processors 104 train the plurality of ensemble classifiers (ensemble classifier 1, ensemble classifier 2 and the like as shown in FIG. 1B) for each of the plurality of cohort for imputation of mobility data for a subject using the plurality of semantic trajectories of each of a plurality of subjects in the each of the plurality of cohorts. The training comprising:
(a) generating (204a) a single training semantic trajectory by concatenating trajectories amongst the plurality of trajectories associated with plurality of subjects;
(b) generating (204b) a plurality of training samples by splitting the single training semantic trajectory into a plurality of sub-trajectories in accordance with a predefined timestep using a sliding window approach;
(c) training (204c) the ensemble classifier based using the plurality of training samples.

The ensemble classifier is global in nature that can predict behavior of a cohort to certain accuracy. Mobility data is quite noisy and traditional classifiers can suffer due to outliers in the data. Ensemble models are known to reduce the impact of outliers on the model as the multiple components of the ensemble model reduce the variance in the prediction and improve the average prediction of the model. Thus, the ensemble classifier, so trained provides a global model to predict location (imputed mobility data) for any unknown user or subject associated with a specific cohort the ensemble classifier is trained for.

The ensemble classifier is trained on the complete training data available when used in real application. However, the method 200 herein utilizes a Leave-One-Out policy only for validation of the proposed objective that semantic trajectory of a new or unknown subject can be predicted by the models trained on the subject's corresponding cohort itself. This is established using two different models. The first model is trained on the cohort's trajectory data not including the test subject's trajectory data at all. The second model is trained on the cohort's data along with a portion of the test subject's trajectory data. The second model, in principle, is expected to have more accuracy on the test subject's trajectory data as it was trained on a portion of the test subject's data in addition to the cohort's data. However, as evident from the results of the experiment, second model has no clear advantage over the first model. This study establishes the approach disclosed by the method 200, wherein if the new subject can be classified correctly to a suitable or relevant cohort, the trained ensemble classifier can predict the semantic trajectory of the unknown/new subject with almost same accuracy as when the system has access to the subject's historical data.

The steps of training ensemble classifier (two imputation models the first model and the second model) using the leave one out approach is provided through below and can be understood in conjunction with FIG. 3.
a. Split the plurality of subjects in accordance with Leave-one-out technique, wherein a single subject among the plurality of subjects is left out as a test subject and remaining subjects among the plurality of subjects are identified as train subjects.
b. Generate (i) a single training semantic trajectory by concatenating trajectories amongst the plurality of trajectories associated with the train subjects, and (ii) a single testing semantic trajectory by concatenating trajectories amongst the plurality of trajectories associated with the test subject.
c. Generating (i) a plurality of training samples by splitting the single training semantic trajectory into a plurality of sub-trajectories in accordance with a predefined timestep using a sliding window approach, and (ii) a plurality of testing samples by splitting the single testing semantic trajectory into a plurality of sub-trajectories in accordance with the predefined timestep using the sliding window approach.
d. Training (i) a first model of the ensemble classifier using the plurality of training samples, and (ii) a second model of the ensemble classifier using a first portion of the plurality of testing samples and the plurality of training samples.
e. Validate the first model and the second model using a second portion of the testing samples and performing hyper parameter tuning of the first model and the second model.

FIGS. 3 is a process flow depicting training of the ensemble classifier for imputation of mobility data, in accordance with some embodiments of the present disclosure. A leave-one-out experiment is conducted on 11 users ( N=11) with data for most number of days in the whole dataset. Two ensemble classifiers models are trained separately. The semantic location trajectories of the train users (training samples) and test users (testing samples) are concatenated separately to form one single trajectory ( global trajectory) each for training and testing. In the next step, the train and test samples for a particular time window ( predefined time step)are prepared following the sliding window approach. A time window of length T indicates using locations visited in previous T/2 and next T/2 timesteps for imputation. For example, if visited locations by a user are {L1,L2,L3,L4,L5,L6,L7,L8,L9,L10,L11,L12} for last 12 hours and the selected time window is 6, the first training sample for a time window of 6 is constructed as {L1,L2,L3,L5,L6,L7} for the target {L4} followed by the next training sample {L2,L3,L4,L6,L7,L8} for the target {L5}, and so on.

Rationale for using small time windows: A window length of less than 5 hours generates very few data points, and very little algorithmic insight is possible to gather from these small sub-trajectories. However, a very large time window (say, more than 12 hours) actually defeats the purpose since attempt is made to impute trajectories with near-real-time delay. Hence, mainly windows of length between 5 to 10 hours (for example 6 hours as used above) are preferred to make inference step faster compared to the models using large sub-trajectories for inference.

This whole experiment is conducted for time windows (6, 8, 10). The training and testing samples are one-hot-encoded as they are categorical in nature. One of the models (first model (Model1)) is trained on all but one users' data. The remaining one user is used as the test subject. The data of the test user are split in two halves. First half (top 50%/ first portion) of this data is included in the training data of the second model (Model 2). Both the first and the second models are tested on the second half of the test user's data (second portion). Hyperparameter tuning is done for one test user once each for Model 1 and Model 2 for all the time windows separately. The same tuned parameters are used for the experiments for the remaining 10 test users.

Dataset: Reality Mining dataset is collected by MIT Media Laboratory over the course of 9 months during 2004-2005 while trying to study community dynamics by tracking a sufficient amount of people with their personal mobile phones. The subjects from this study consisted of students and faculty from two programs within a major research institute. Data recorded included call logs, Bluetooth devices in close proximity of the user's device, cell tower IDs, application usage, and phone status. A temporal location data of the users which is a categorical time-series data of 73 users with hourly granularity and locations having semantic labels {'Home', `Elsewhere', 'Work', `No Signal', 'Off'}. The location labels were generated using a Hidden Markov Model conditioned on both the hour of day as well as on weekend or weekday, with over 95% accuracy. The length of the smallest timeseries is two days and the length of the longest timeseries is 6 months and the length of the combined data for all the users is 6887 days. Further, the labels are taken as ground truth. In this dataset, a typical semantic trajectory for a day looks like {L1,L2,... ,L24} where Li represents the semantic location at iₜₕ hour of the day and belongs to the set {'Home', `Elsewhere', 'Work', `No Signal', 'Off'}. The single trajectory of each user is further split into sub-trajectories of smaller lengths which are defined in terms of a time window τ.

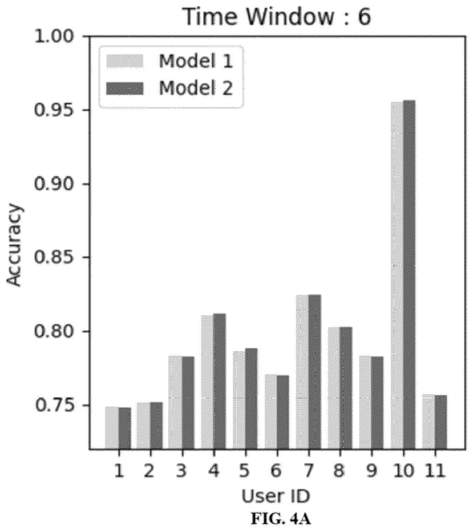

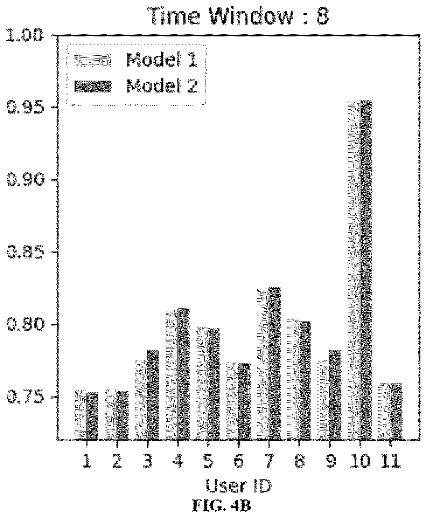

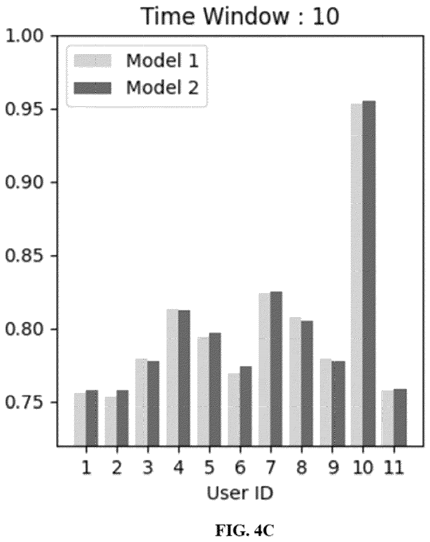

FIGS. 4A through 4C (collectively referred to as FIG. 4) provides accuracy comparison for the first model and the second model (the ensemble classifier) trained using the leave one out approach, with and without test subject's data for imputation of mobility data of test subject, in accordance with some embodiments of the present disclosure. As depicted in FIG. 4, test accuracy varied considerably across the users which means some of the users followed more predictable routine than others. It is also noticed that using a fraction of test user's data for training can both improve or deteriorate the accuracy (Table 1). However, the impact was very minuscule.

**Table 1**

| Time window | UID | Accuracy 1 | Accuracy 2 |
|---|---|---|---|
| 6 | 1 | 0.749304 | 0.747911 |
| - | 2 | 0.751472 | 0.751472 |
| - | 3 | 0.783518 | 0.782288 |
| - | 4 | 0.810585 | 0.811513 |
| - | 5 | 0.786378 | 0.788442 |
| - | 6 | 0.770911 | 0.769663 |
| - | 7 | 0.824294 | 0.824859 |
| - | 8 | 0.802555 | 0.802555 |
| - | 9 | 0.783518 | 0.782288 |
| - | 10 | 0.955830 | 0.956419 |
| - | 11 | 0.757576 | 0.756657 |
| | | | |
| 8 | 1 | 0.754647 | 0.752788 |
| - | 2 | 0.755307 | 0.753538 |
| - | 3 | 0.775862 | 0.782020 |
| - | 4 | 0.809944 | 0.810874 |
| - | 5 | 0.798554 | 0.797521 |
| - | 6 | 0.773750 | 0.772500 |
| - | 7 | 0.824661 | 0.825792 |
| - | 8 | 0.804651 | 0.801744 |
| - | 9 | 0.775862 | 0.782020 |
| - | 10 | 0.954599 | 0.954599 |
| - | 11 | 0.758732 | 0.785732 |
| | | | |
| **10** | 1 | 0.756744 | 0.758140 |
| - | 2 | 0.753247 | 0.757969 |
| - | 3 | 0.779901 | 0.778052 |
| - | 4 | 0.813953 | 0.813023 |
| - | 5 | 0.794727 | 0.797311 |
| - | 6 | 0.769712 | 0.774093 |
| - | 7 | 0.824462 | 0.825028 |
| - | 8 | 0.807916 | 0.805588 |
| - | 9 | 0.779901 | 0.778052 |
| - | 10 | 0.953955 | 0.955136 |
| - | 11 | 0.758510 | 0.758970 |

Form table 1, it can be understood that even if test user's data is used to train the imputation model, the accuracy does not change much. This means, at semantic level of the trajectories, the system 100 learns about the mobility patterns of the test subject as much as possible from the cohort it has been classified to itself. Thus, the system 100 can predict the semantic trajectory of a new or unknown subject using the imputation model trained on the semantic trajectory data of the cohort to which the subject is closest in some predefined aspect. However, this may not be true when working purely with GPS trajectories as used in conventional imputation models without adding any semantics to them.

Referring back to method 200 and referring to FIG. 1B, at step 206 of the method 200, the one or more hardware processors receive a request during an inferencing phase for imputing the mobility data of an unknown subject, wherein historical mobility data of the unknown subject (unknown user) is scarce or unavailable.

At step 208 of the method 200, the one or more hardware processors classify via the cohort classifier executed by the one or more hardware processors, the unknown subject to a cohort from amongst the plurality of cohorts via the cohort classifier based on meta data acquired for the unknown subject. The cohort for the unknown subject are identified using categorical clustering techniques followed by building the cohort classifier to assign the unknown subject to the most suitable cluster, associated with the cohort, using the metadata of the subject.

At step 210 of the method 200, the one or more hardware processors identify the trained ensemble classifier associated with the cohort of the unknown subject, from among the plurality of trained ensemble classifiers.

At step 212 of the method 200, the one or more hardware processors; and impute via the trained ensemble classifier executed by the one or more hardware processors, the mobility data of the unknown subject.

Raw trajectories(GPS trajectories) provide very little to no insight into the behavioral aspect of human trajectories. Imputing long missing parts in GPS trajectories is quite difficult. Thus, the method disclosed herein adds semantics to the trajectories makes it much easier to analyze and interpret the trajectories. It is difficult to predict and impute a random individual's trajectory for which there is no or little historical data. Thus, the method first classifies the individual to a meaningful cohort (e.g., students, working class, senior citizens, etc.), and then the trained ensemble classifier predicts his/her mobility behavior, more so, at a semantic level.

Data imputation, in general, needs large amount of data and is often an offline process. However, using small sub-trajectories for inference, as used by the method disclosed herein, makes it easy to use the system 100 online for imputing an individual's trajectory in almost real time. Out of numerous possible use cases where trajectory imputation is used for developing bigger models specific to the problem statement, one use case is especially relevant during contagious epidemic spread (e.g., COVID). Imputed trajectory data can subsequently be used effectively for calculating risk of getting infected for an individual owing to his travel to infected zones (hotspots) in last couple of hours based on the prediction of the system 100 (even if trajectory data is missing for last couple of hours for that individual). Also warning can be provided to an individual on his/her mobile device indicating a possible infection risk based on his future trajectory prediction for next few hours by tweaking our imputation model for next location prediction use case.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) for imputation of mobility data, the method comprising:
generating (202), via one or more hardware processors, a plurality of semantic trajectories of each of a plurality of subjects in a cohort amongst a plurality of cohorts from associated plurality of Global Positioning System (GPS) trajectories obtained for each of the plurality of subjects across a plurality of time periods, wherein each of the plurality of semantic trajectories is annotated with geographical locations or higher semantic locations associated with GPS locations present in each of the plurality of GPS trajectories;
training (204), via the one or more hardware processors, a plurality of ensemble classifiers for each of the plurality of cohorts for imputation of mobility data for a subject using the plurality of semantic trajectories of each of the plurality of subjects in the each of the plurality of cohorts, the training of an ensemble classifier from among of the plurality of ensemble classifiers comprising:
generating (204a) a single training semantic trajectory by concatenating trajectories amongst the plurality of trajectories associated with plurality of subjects;
generating (204b) a plurality of training samples by splitting the single training semantic trajectory into a plurality of sub-trajectories in accordance with a predefined timestep using a sliding window approach; and
training (204c) the ensemble classifier based using the plurality of training samples;
receiving (206) a request during an inferencing phase, by the one or more hardware processors, for imputing the mobility data of an unknown subject, wherein historical mobility data of the unknown subject is scarce or unavailable;
classifying (208), via a cohort classifier executed by the one or more hardware processors, the unknown subject to a cohort from amongst the plurality of cohorts based on meta data acquired for the unknown subject;
identifying (210), via the one or more hardware processors, the trained ensemble classifier associated with the cohort of the unknown subject, from among the plurality of trained ensemble classifiers; and
imputing (212), via the trained ensemble classifier executed by the one or more hardware processors, the mobility data of the unknown subject.

2. The method as claimed in claim 1, wherein the cohort for the unknown subject are identified using the cohort classifier, pre-trained using the metadata of the subject, and wherein the plurality of cohorts are identified using clustering techniques.

3. A system (100) for imputation of mobility data, the system (100) comprising:
a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
generate a plurality of semantic trajectories of each of a plurality of subjects in a cohort amongst a plurality of cohorts from associated plurality of Global Positioning System (GPS) trajectories obtained for each of the plurality of subjects across a plurality of time periods, wherein each of the plurality of semantic trajectories is annotated with geographical locations or higher semantic locations associated with GPS locations present in each of the plurality of GPS trajectories;
train a plurality of ensemble classifiers for each of the plurality of cohorts for imputation of mobility data for a subject using the plurality of semantic trajectories of each of the plurality of subjects in the each of the plurality of cohorts, the training of an ensemble classifier from among of the plurality of ensemble classifiers comprising:
generating a single training semantic trajectory by concatenating trajectories amongst the plurality of trajectories associated with plurality of subjects;
generating a plurality of training samples by splitting the single training semantic trajectory into a plurality of sub-trajectories in accordance with a predefined timestep using a sliding window approach; and
training the ensemble classifier based using the plurality of training samples;
receive a request during an inferencing phase, by the one or more hardware processors, for imputing the mobility data of an unknown subject, wherein historical mobility data of the unknown subject is scarce or unavailable;
classify via a cohort classifier executed by the one or more hardware processors, the unknown subject to a cohort from amongst the plurality of cohorts based on meta data acquired for the unknown subject;
identify the trained ensemble classifier associated with the cohort of the unknown subject, from among the plurality of trained ensemble classifiers; and
impute via the trained ensemble classifier executed by the one or more hardware processors, the mobility data of the unknown subject.

4. The system as claimed in claim 3, wherein the cohort for the unknown subject are identified using the cohort classifier, pre-trained using the metadata of the subject, and wherein the plurality of cohorts are identified using clustering techniques.

5. One or more non-transitory machine-readable information storage mediums comprising one or more instructions which when executed by one or more hardware processors cause:
generating a plurality of semantic trajectories of each of a plurality of subjects in a cohort amongst a plurality of cohorts from associated plurality of Global Positioning System (GPS) trajectories obtained for each of the plurality of subjects across a plurality of time periods, wherein each of the plurality of semantic trajectories is annotated with geographical locations or higher semantic locations associated with GPS locations present in each of the plurality of GPS trajectories;
training a plurality of ensemble classifiers for each of the plurality of cohorts for imputation of mobility data for a subject using the plurality of semantic trajectories of each of the plurality of subjects in the each of the plurality of cohorts, the training of an ensemble classifier from among of the plurality of ensemble classifiers comprising:
generating a single training semantic trajectory by concatenating trajectories amongst the plurality of trajectories associated with plurality of subjects;
generating a plurality of training samples by splitting the single training semantic trajectory into a plurality of sub-trajectories in accordance with a predefined timestep using a sliding window approach; and
training the ensemble classifier based using the plurality of training samples;
receiving a request during an inferencing phase, by the one or more hardware processors, for imputing the mobility data of an unknown subject, wherein historical mobility data of the unknown subject is scarce or unavailable;
classifying, via a cohort classifier executed by the one or more hardware processors, the unknown subject to a cohort from amongst the plurality of cohorts based on meta data acquired for the unknown subject;
identifying, via the one or more hardware processors, the trained ensemble classifier associated with the cohort of the unknown subject, from among the plurality of trained ensemble classifiers; and
imputing, via the trained ensemble classifier executed by the one or more hardware processors, the mobility data of the unknown subject.

6. The one or more non-transitory machine-readable information storage mediums of claim 5, wherein the cohort for the unknown subject are identified using the cohort classifier, pre-trained using the metadata of the subject, and wherein the plurality of cohorts are identified using clustering techniques.
